# EUROPÄISCHE PATENTANMELDUNG

(11) **EP 1 223 793 A1**
(43) Veröffentlichungstag der Anmeldung: **17.07.2002**
(21) Anmeldenummer: 01127197.0
(22) Anmeldetag: 16.11.2001
(51) Int. Cl.: H05F 3/02, B32B 33/00, B32B 27/04, B32B 15/08

(54) **Anti-Statik-Bodenbelag**

(30) Priorität: 16.01.2001 DE 20100843 U
(71) Anmelder: WPT GmbH, 32756 Detmold (DE)
(72) Erfinder: Kettler, Volker, 33824 Werther (DE); Rose, Stefan, 59581 Warstein (DE)
(74) Vertreter: Patentanwälte Meinke, Dabringhaus und Partner

(57) **Zusammenfassung**

Die Erfindung betrifft einen Bodenbelag, insbesondere Laminatfußboden mit einer Gegenzugbeschichtung auf der Rückseite und/oder mit einer aus einem Bindemittel und Füllstoffen gebildeten, mit der Rückseite des Bodenbelages wenigstens bereichsweise verbindbaren oder verbundenen Dämmunterlage.

Nachteilig an derartigen Laminatfußböden ist insbesondere, dass diese sich elektrostatisch aufladen.

Die Aufgabe der Erfindung liegt daher darin, eine Möglichkeit zu finden, eine elektrostatische Aufladung derartiger Fußbodenbeläge zu vermeinden bzw. zu vermindern.

Erfindungsgemäß wird diese Aufgabe dadurch gelöst, dass die auf der Rückseite des Laminatfußbodens angeordnete Gegenzugbeschichtung elektrostatisch ableitfähig ist und/oder das als Füllstoffe der auf der Rückseite des Bodenbelages angeordneten Dämmunterlage elektrisch leitende Materialien vorgesehen sind.

## Beschreibung

Die Erfindung betrifft einen Bodenbelag, insbesondere Laminatfußboden mit einer Gegenzugbeschichtung auf der Rückseite und/oder mit einer aus einem Bindemittel und Füllstoffen gebildeten, mit der Rückseite des Bodenbelages wenigstens bereichsweise verbindbaren oder verbundenen Dämmunterlage.

Gattungsgemäße Laminatfußböden weisen zahlreiche Vorzüge auf, insbesondere sind sie leicht zu pflegen und besitzen eine hohe Lebensdauer. Früher existierende Probleme, insbesondere bei aus hochverdichteten Faserplatten hergestellten Laminatböden, die beim Begehen relativ laute Geräusche entstehen ließen, sind durch mit der Rückseite der Laminatböden verbundene Schalldämmvorrichtungen gelöst worden.

Ein weiterer Nachteil gattungsgemäßer Bodenbeläge, die auf der Oberseite eine Beschichtung und/oder ein Furnier aufweisen, besteht nach neueren Untersuchungen darin, dass diese elektrostatisch aufladbar sind und/oder dass sich Personen, die derartige Laminatböden begehen, unter ungünstigen Bedingungen elektrostatisch aufladen können. Der Grund ist in den Isoliereigenschaften der verwendeten Melaminharzoberflächen oder dichten Lackierungen zu suchen.

Bekanntlich werden werden jedesmal, wenn Materialien gegeneinander reiben, Elektronen übertragen. Das eine Material verliert Elektronen und erfährt dabei eine positive Aufladung, das andere nimmt Elektronen auf, und erfährt dabei eine negative Aufladung. Das Ungleichgewicht zwischen der Zahlen der positiv geladenen Partikel (Protonen) und der negativ geladenen Partikel (Elektronen) bildet die Elektrostatik. Dies stellt solange kein Problem dar, als die relative Luftfeuchtigkeit 65 % oder mehr beträgt, da dann die Luftfeuchtigkeit zu einem ausreichenden Ausgleich führt. Bei trocknerer Luft erfolgt jedoch eine stärkere elektrostatische Aufladung. Dies führt insbesondere in typischerweise trockenen Umgebungen, wie beispielsweise Krankenhäusern, aber auch in Büroflächen, mögicherweise zu einer erheblichen statischen Aufladung, die noch durch die Behandlung der Fußbodenflächen durch entsprechende Reinigungsmittel oder Reinigungsvorrichtungen erhöht wird. Eine einmalige Berührung mit einem leitfähigen Material führt dann zu einer plötzlichen Entladung, wobei auch winzige Lichtbögen entstehen können. Dies ist ein Ersatz für empfindliche Personen, etwa Träger von Herzschrittmachern, nachteilig. Zum anderen reagieren besonders empfindliche elektronische Geräte, beispielsweise Überwachungsmonitore, kadiographische Apparaturen, aber auch Computer, Drucker, Laptops und dergleichen negativ auf derartige plötzliche Entladungen. Es kann zu Fehlfunktionen bishin zu Zerstörungen einzelner, besonders emfindlicher Geräteteile kommen.

Da auf die Laminatbodenbeschichtungen nicht verzichtet werden kann, liegt die Aufgabe der Erfindung darin, eine andere Möglichkeit zu finden, eine elektrostatische Aufladung derartiger Fußbodenbeläge zu vermeiden bzw. zu vermindern.

Erfindungsgemäß wird diese Aufgabe dadurch gelöst, dass die auf der Rückseite des Laminatfußbodens angeordnete Gegenzugbeschichtung elektrostatisch ableitfähig ist und/oder dass als Füllstoffe der auf der Rückseite des Bodenbelages angeordneten Dämmunterlage elektrisch leitende Materialien vorgesehen sind.

Versuche haben überraschenderweise gezeigt, dass Kaschierungen mit elektrostatisch ableitfähigen Materialien oder Papieren, die direkt an den Laminatboden verklebt werden, die elektrostatische Personenaufladung deutlich unter die kritischen Größen, insbesondere den geltenden Grenzwert von 2 kV senken könnte. In Übereinstimmung mit der EN 1815 für antistatische elastische Bodenbeläge und der ISC 6356 für textile Bodenbeläge soll die Körperspannung bei 23 °C und 25 % relativer Luftfeuchte den Wert von 2 kV nicht übersteigen. Obwohl bei herkömmlichen Laminatböden durch die Kunstharzoberflächen eine starke Aufladung erfolgt, die das Raumklima verändert und somit das Verhältnis von positiven und negativen Luftteilchen verändert, so daß eine Art künstliche Gewitterstimmung entsteht, ist es durch die erindungsgemäße ableitfähige Rückseite gelungen, die Werte mehr als zu halbieren. So reduziert sich der Wert bei einem gattungsgemäßen, mit einer Dämmunterlage versehenen Laminatboden beim Begehen mit Gummisohlen von 3,0 kV auf 1,5 kV, beim Begehen mit Normschuhwerk reduziert er sich sogar von 2,8 kV auf nur noch 1,0 kV, gemessen bei 21 °C und 50 % relativer Luftfeuchtigkeit. Entsprechende Ergebnisse ergeben sich nicht nur bei Verwendung eines Laminatfußbodens mit Schalldämmunterlage, sondern auch bei entsprechend ableitfähig eingestellten Rippenpappen, Wollfilzpappen oder anderen Unterlagsmaterialien.

Vorteilhaft ist die elektrostatisch ableitfähige Gegenzugbeschichtung aus einer Metallfolienbeschichtung, einem Metallblech oder dergleichen gebildet.

Als Füllstoffe kommen zunächst ableitfähige Kohlenstoffe insbesondere in Form von Pulver, Fasern oder Granulat in Betracht, ebenso auch elektrisch leitfähiges Graphitpulver, Eisenpulver, Eisenspäne oder dergleichen. Auch elektrisch ableitfähige Ammoniumsalze und/oder Metalloxide sind möglich.

Besonders vorteilhaft ist es, wenn auch das Bindemittel der Dämmunterlage aus elektrisch ableitfähigen Formulierungen besteht, insbesondere aus derartigen Harzen.

Das Ergebnis läßt sich noch dadurch verbessern, daß zur Verbindung des Bodenbelages, der Dämmunterlage und/oder der Gegenzugbeschichtung ein elektrostatisch ableitfähiger Klebstoff, insbesondere ein thermoplastischer Kleber (Hotmelt) verwendet wird.

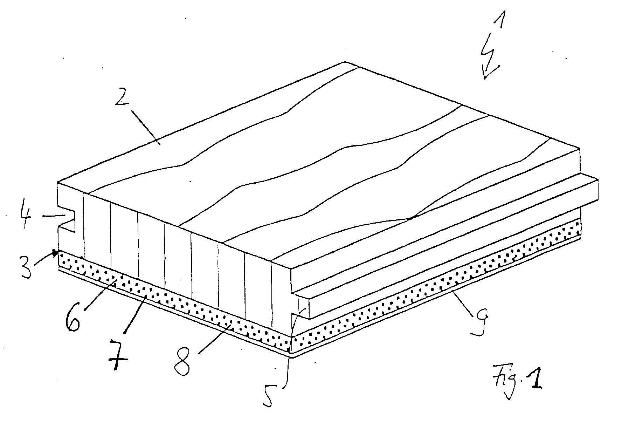

Die Erfindung ist nachstehend anhand der Zeichnung näher erläutert. Diese zeigt in der einzigen
- Fig. 1:: eine perspektivische Ansicht eines erfindungsgegemäßen Laminatfußboden.

Ein allgemein mit 1 bezeichnetes Bodenbelagselement weist eine Oberseite 2, eine Unterseite 3 sowie auf jeweils gegenüberliegenden Seiten eine Nut 4 und eine Feder 5 auf. Mit der Unterseite 3 des Bodenbelages 1 ist eine aus einem Bindemittel 6 und Füllstoffen 7 gebildete Schalldämmvorrichtung 8 verbunden. Das Bindemittel 6 kann sowohl ein Polyurethan (PU) wie auch ein Polyethylen (PE), Latex, Polyvinylchlorid (PVC), Acrylat oder ein aufgeschäumtes 2-Kompontenten-Polyurethan (PU) sein. Vorzugsweise handelt es sich dabei um elektrisch ableitfähige Formulierungen, insbesondere Harze.

Die Füllstoffe 7 können ableitfähige Kohlenstoffe in Form von Pulver, Fasern und/oder Granulat sein. Eingesetzt werden können aber auch elektrisch leitfähiges Graphitpulver, Eisenpulver, Eisenspäne oder dergleichen, ggf. in Kombination, auch mit Ammoniumsalzen und/oder Metalloxiden.

Auf der Unterseite 3 ist eine Gegenzugbeschichtung 9 aufkaschiert. Diese ist ebenfalls elektrostatisch ableitfähig ausgebildet und besteht vorzugsweise aus einer Metallfolienbeschichtung oder einem Metallblech. Zur Verbindung des Bodenbelagselementes 1, der Schalldämmunterlage 8 und/oder der Gegenzugbeschichtung 9 ist ein elektrostatisch ableitfähiger Klebstoff, insbesondere ein thermoplastischer Klebstoff (Hotmelt) vorgesehen.

Durch die vorgeschlagenen Mittel wird praktisch eine Halbierung der elektrostatischen Aufladung bisheriger Laminatfußböden erreicht. Dies gilt prinzipiell nicht nur für Bodenbeläge 1 mit Schalldämmunterlagen 8, sondern auch für andere Bodenbeläge 1 mit entsprechend ableitfähig eingestellten Rippenpappen, Wollfilzpappen oder anderen Unterlagsmaterialien.

## Patentansprüche

1. Bodenbelag, insbesondere Laminatfußboden mit einer Gegenzugbeschichtung auf der Rückseite und/oder mit einer aus einem Bindemittel und Füllstoffen gebildeten, mit der Rückseiseite des Bodenbelages wenigstens bereichsweise verbindbaren oder verbundenen Dämmunterlage,
**dadurch gekennzeichnet,**
**dass** als Füllstoffe (7) elektrisch leitende Materialien vorgesehen sind und/oder dass die Gegenzugbeschichtung (9) elektrostatisch ableitfähig ist.

2. Bodenbelag nach Anspruch 1,
**dadurch gekennzeichnet,**
**dass** die elektrostatisch ableitfähige Gegenzugbeschichtung (9) aus einer Metallfolienbeschichtung, einem Metallblech oder dergleichen besteht.

3. Bodenbelag nach Anspruch 1,
**dadurch gekennzeichnet,**
**dass** als Füllstoffe (7) ableitfähiger Kohlenstoff, insbesondere in Form von Pulver, Fasern und/oder Granulat vorgesehen sind. .

4. Bodenbelag nach Anspruch 1 und/oder wenigstens einem der folgenden,
**dadurch gekennzeichnet,**
**dass** als Füllstoffe (7) elektrisch leitfähiges Graphitpulver, Eisenpulver, Eisenspäne oder dergleichen vorgesehen sind.

5. Bodenbelag nach Anspruch 1 und/oder wenigstens einem der folgenden,
**dadurch gekennzeichnet,**
**dass** elektrisch ableitfähige Ammoniumsalze und/oder Metalloxide der Additive vorgesehen sind.

6. Bodenbelag nach Anspruch 1, und/oder wenigstens einem der folgenden
**dadurch gekennzeichnet,**
**dass** als Bindemittel (6) elektrisch ableitfähige Formulierungen, insbesondere Harze vorgesehen sind.

7. Bodenbelag nach Anspruch 1 und/oder wenigstens einem der folgenden,
**dadurch gekennzeichnet,**
**dass** zur Verbindung des Bodenbelages (1), der Dämmunterlage (8) und/oder der Gegenzugbeschichtung (9) ein elektrostatisch ableitfähiger Klebstoff, insbesondere ein thermoplastischer Kleber (Hotmelt) vorgesehen ist.
